# EUROPEAN PATENT SPECIFICATION

(11) **EP 2 273 588 B1**
(45) Date of publication and mention of the grant of the patent: **12.08.2015**
(21) Application number: 10251214.2
(22) Date of filing: 06.07.2010
(51) Int. Cl.: H01M 2/34, H01M 2/20, H01M 2/22, H01M 2/02, H01M 10/42, H01M 2/04

(54) **Battery pack and manufacturing method for the same**
Batteriepack und Herstellungsverfahren für dieses Batteriepack
Bloc-batterie et son procédé de fabrication

(30) Priority: 06.07.2009 US 223302 P; 16.06.2010 US 817120
(43) Date of publication of application: 12.01.2011
(73) Proprietor: Samsung SDI Co., Ltd., Yongin-si, Gyeonggi-do (KR)
(72) Inventor: Seongjoon, Lee , Samsung SDI Co., Ltd., Yongin-si, Geonggi-do (KR); Youngho, Kim , Samsung SDI Co., Ltd., Yongin-si, Geonggi-do (KR)
(74) Representative: Mounteney, Simon James

(56) References cited:
- EP-A1- 1 659 651
- WO-A1-2008/050952
- WO-A1-2008/050955
- KR-B1- 100 540 348

## Description

The invention relates to a battery pack and a method of manufacturing a battery pack.

A lithium ion battery pack may include a core pack that has a bare cell and a protection circuit module.

The bare cell includes a positive electrode plate, a negative electrode plate, electrolyte, and a separator for applying power to an external electronic device and enabling rechargeability. The protection circuit module protects the battery pack from over-charge and over-current and prevents performance degradation from over-discharge.

The bare cell and the protection circuit module are welded to a lead plate having a specific shape formed of metal, so that the bare cell can be electrically connected to the protection circuit module.

The present invention sets-out to provide a battery pack that includes a simple structure for connecting a bare cell to a protection circuit module and that is configured to improve coupling strength between the bare cell and the protection circuit module, and a method of manufacturing the battery pack.

Accordingly the invention provides a secondary battery as set out in Claim 1. Preferred features of the invention are set out in Claims 2 to 10.

A battery pack according to an embodiment can therefore include a lead plate having a simple structure.

In addition, the bare cell can be coupled to the protection circuit module in a simple manner where a recess corresponding to the lower part of the lead plate is formed in a cap plate of the bare cell, and the lead plate can be press-fit coupled to the recess in some embodiments.

Moreover, in some embodiments the portion surrounding the recess of the cap plate can be melted and coupled to the lead plate, thereby improving coupling strength between the bare cell and the lead plate.

EP1659651 discloses a can-type rechargeable battery that includes a connection portion for coupling a protection circuit to a can-type bare cell and a lead plate for coupling the connection portion to the can. At least one protrusion is disposed at a connection portion outside the can and a lead plate has a hole that is engaged with the protrusion.

A prior art battery is also represented e.g. by KR100540340348.

### BRIEF DESCRIPTION OF THE DRAWINGS.

Embodiments of the invention will now be described by way of example and with reference to the accompanying drawings, in which;-
FIG. 1 illustrates an exploded view of a battery pack according to an embodiment of the invention;
FIG. 2 illustrates an exploded view of a bare cell of a battery pack of Figure 1,
FIG. 3 illustrates a front view of the battery pack of Figure 1;
FIG. 4 illustrates an enlarged view of the battery pack of Figure 1;
FIGS. 5 and 6 illustrate enlarged views of a battery pack according to a second embodiment of the invention;
Figure 7 is a view of a lead plate forming part of a third embodiment of the invention;
Figure 8 is a view of a lead plate forming part of a fourth embodiment of the invention; and
Figure 9 is a view of a lead plate forming part of a fifth embodiment of the invention.

### DETAILED DESCRIPTION

Embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the invention to those skilled in the art. Like reference numerals denote like elements throughout.

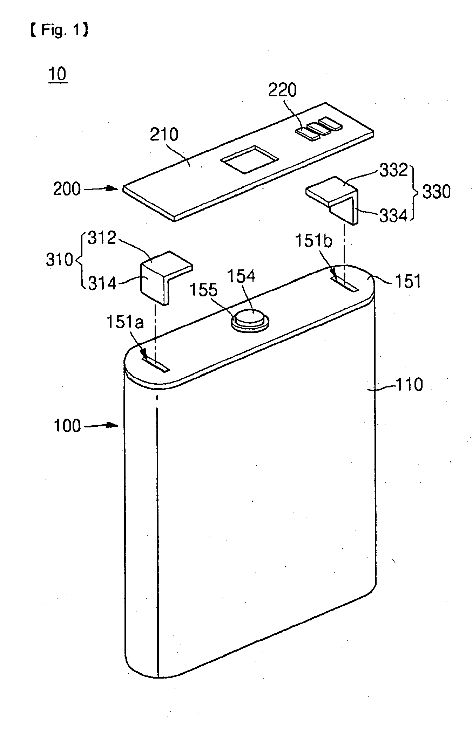

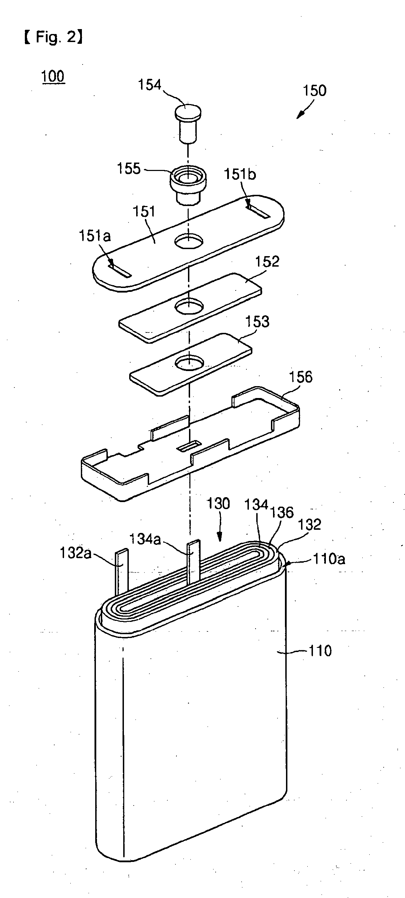

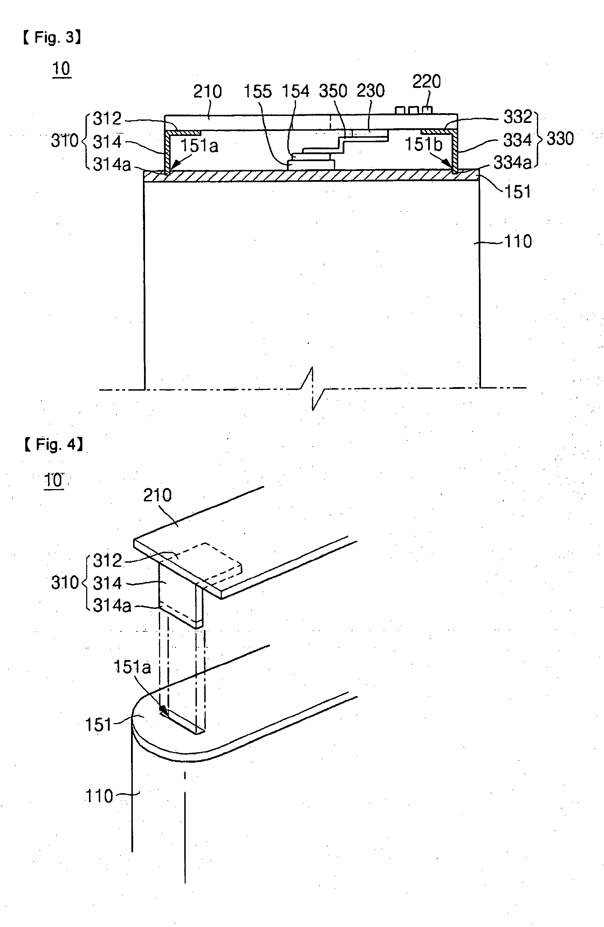

FIG. 1 is an exploded view of a battery pack according to a first embodiment of the invention. FIG. 2 is an exploded view of a bare cell of the battery pack. FIG. 3 illustrates a front view of the battery pack of Figures 1 and 2.

Referring to FIG. 1, the battery pack 10 includes a bare cell 100, a protection circuit module 200, and first and second L-shaped lead plates 310 and 330 electrically and mechanically connecting the bare cell 100 to the protection circuit module 200. A cap plate 151 of the bare cell 100 includes first and second recesses 151a and 151b at positions respectively corresponding to the first and second lead plates 310 and 330. The recesses 151a and 151b are slot-shaped and correspond to the lower parts of the first and second lead plates 310 and 330, which are laminar. The first and second lead plates 310 and 330 are press-fit coupled to the recesses 151a and 151b of the cap plate 151. In alternative embodiments, the surroundings of the recesses 151a and 151b of the cap plate 151 are melted and coupled to the first and second lead plates 310 and 330, so as to increase coupling strength of the bare cell 100 and the first and second lead plates 310 and 330.

Referring to FIGS. 1 and 2, the bare cell 100 includes a can 110, an electrode assembly 130 disposed in the can 110, and a cap assembly 150 closing a top opening 110a of the can 110.

The can 110, having an approximate rectangular parallelepiped shape, includes the top opening 110a at one of its ends. The can 110 is formed of metal and functions as a terminal. The electrode assembly 130 that will be described later may be inserted through the top opening 110a of the can 110 during manufacture.

The electrode assembly 130 includes a first electrode plate 132, a second electrode plate 134, and a separator 136 that are wound in a jelly roll shape. The separator 136 is disposed between the first electrode plate 132 and the second electrode plate 134.

The first electrode plate 132 includes a first electrode collector (not shown) and a first electrode coating portion (not shown). A first electrode tab 132a is attached to a side of the first electrode collector and protrudes to the top opening 110a of the can 110.

The second electrode plate 134 includes a second electrode collector (not shown) and a second electrode coating portion (not shown). A second electrode tab 134a is attached to a side of the second electrode collector and protrudes to the top opening 110a of the can 110. The second electrode tab 134a may contain copper (Cu) or nickel (Ni). When the first electrode plate 132 is a positive electrode, the second electrode plate 134 is a negative electrode. When the first electrode plate 132 is a negative electrode, the second electrode plate 134 is a positive electrode. Hereinafter, the first electrode plate 132 is a positive electrode, and the second electrode plate 134 is a negative electrode.

The separator 136 includes a porous film containing one of polyethylene (PE), polypropylene (PP), and a combination thereof. The separator 136, disposed in the electrode assembly 130, serves to prevent electronic conduction between the first electrode plate 132 and the second electrode plate 134 and improve mobility of lithium ions. The separator 136 also serves to prevent the first electrode plate 132 from contacting the second electrode plate 134. In addition, when the temperature of the battery pack 10 is increased by an external short circuit, the separator 136 serves to prevent further temperature increase of the battery pack 10, through a shut-down operation.

The cap assembly 150 includes the cap plate 151, an insulation plate 152, a terminal plate 153, an electrode terminal 154, and a gasket 155. The cap assembly 150 is coupled to the electrode assembly 130 at the top opening 110a of the can 110 with an insulation case 156, in order to seal the can 110.

A terminal through hole is disposed in the middle of the cap plate 151. An electrolyte injection hole (not shown) is disposed in a side of the cap plate 151. A safety vent is disposed at a surface of the cap plate 151 corresponding to the electrolyte injection hole with respect to the terminal through hole. After electrolyte is injected into the can 110, the electrolyte injection hole is covered with a cover (not shown) such as a ball. The first electrode tab 132a is electrically connected to a side of the cap plate 151 corresponding to the first electrode tab 132a. Thus, the cap plate 151 and the can 110 contacting the cap plate 151 have a positive polarity. The cap plate 151 includes a metal plate having a size corresponding to the top opening 110a of the can 110. The first and second recesses 151a and 151b, respectively coupled to the first and second lead plates 310 and 330, are each disposed at a respective side of the cap plate 151. The first and second recesses 151a and 151b will be described later in detail.

The insulation plate 152 is coupled to the lower surface of the cap plate 151, and formed of an insulation material that forms the gasket 155. The terminal plate 153 is coupled to the lower surface of the insulation plate 152 and formed of nickel alloy. The insulation plate 152 and the terminal plate 153 are provided with through holes, which are identical to the terminal through hole of the cap plate 151, at positions corresponding to the terminal through hole of the cap plate 151.

The electrode terminal 154 is inserted through the terminal through holes of the cap plate 151, the insulation plate 152 and the terminal plate 153, and electrically connected to the second electrode tab 134a of the electrode assembly 130. Thus, the electrode terminal 154 has a negative polarity.

When the electrode terminal 154 is inserted into the terminal through hole of the cap plate 151, the gasket 155 is disposed between the electrode terminal 154 and the cap plate 151 to insulate the electrode terminal 154 and the cap plate 151 from each other.

Referring to FIGS. 1 and 3, the protection circuit module 200 includes a substrate 210, a protection circuit part (not shown), a charge/discharge terminal 220, a positive temperature coefficient (PTC) device 230, the first lead plate 310, the second lead plate 330, and a third lead plate 350. The protection circuit module 200 includes a conductive metal pattern (not shown) on the substrate 210.

The protection circuit module 200 is disposed on the cap plate 151 in order to protect the bare cell 100 from over-charge and over-current, and to prevent performance degradation from over-discharge. The protection circuit module 200 may or may not include the first lead plate 310, the second lead plate 330, and the third lead plate 350. Hereinafter, the first lead plate 310, the second lead plate 330, and the third lead plate 350 are independent of the protection circuit module 200.

The substrate 210 includes a conductive metal pattern (not shown) mounted thereon, and a plurality of thin substrates stacked thereon. The substrate 210 may be formed of epoxy or Bakelite-based material. The conductive metal pattern is electrically connected to the protection circuit part, the charge/discharge terminal 220, the first lead plate 310, the second lead plate 330, and the PTC device 230.

The protection circuit part serves to check information about the charge/discharge state, current, voltage and temperature of a battery to protect the battery.

The charge/discharge terminal 220 is electrically connected to the protection circuit part and the conductive metal pattern to electrically communicate with an external device.

The PTC device 230, disposed under the substrate 210, is electrically connected to the electrode terminal 154 of the bare cell 100 through the third lead plate 350. When the temperature of the battery pack 10 is greater than a critical point, the electric resistance of the PTC device 230 becomes infinite. Thus, when the temperature of the battery pack 10 is greater than a critical point, the PTC device 230 limits a charge/discharge current of the battery pack 10.

The first and second lead plates 310 and 330, respectively disposed on both lower sides of the substrate 210, electrically and mechanically connect the cap plate 151 of the bare cell 100 to the protection circuit module 200. The first and second lead plates 310 and 330 are positive electrode lead plates. In this case, the first and second lead plates 310 and 330 electrically connect the bare cell 100 to the protection circuit module 200. Alternatively, one of the first and second lead plates 310 and 330 may be a positive electrode lead plate, and the other may be a dummy lead plate. In this case, the dummy lead plate just spaces the bare cell 100 apart from the protection circuit module 200 without electrically connecting the bare cell 100 to the protection circuit module 200. Hereinafter, the first and second lead plates 310 and 330 are positive electrode lead plates. However, even when just one of the first and second lead plates 310 and 330 is a positive electrode lead plate, a dummy lead plate may have the same configuration as the positive electrode lead plate except that the dummy lead plate is not connected to the conductive metal pattern of the protection circuit module 200.

In alternative embodiments the first and second lead plates 310 and 330 may have mutually different configurations, regardless of whether they both form an electrical connection between the bare cell 100 and the protection circuit module or not.

The first lead plate 310 includes a first plate 312 and a second plate 314, and the second lead plate 330 includes a first plate 332 and a second plate 334. The second plates 314, 334 respectively serve as extensive portions that bridge the gap between the bare cell 100 and the protection circuit module and control the separation distance between them. The first plates 312, 322 serve as support portions, upon which the protecting circuit module is supported. In particular, the first lead plate 310 includes the first plate 312 soldered to a side of the protection circuit module 200 that faces the bare cell, and the second plate 314 connected to one side of the first plate 312 and electrically connected to one side of the cap plate 151. The second lead plate 330 includes the first plate 332 soldered to one side of the protection circuit module 200 that faces the base cell, and the second plate 334 connected to one side of the first plate 332 and electrically connected to one side of the cap plate 151. In more detail, the first plates 312 and 332 and the second plates 314 and 334 have tetragonal laminar shapes, and the second plates 314 and 334 are bent toward the bare cell 100 to be approximately perpendicular to the first plates 312 and 332 to define an L-shaped profile. The lower parts of the second plates 314 and 334 are respectively coupled to the first and second recesses 151a and 151b corresponding to the lower parts of the second plates 314 and 334. The lower part of the second plate 314 of the first lead plate 310 is defined as a first coupling part 314a, and the lower part of the second plate 334 of the second lead plate 330 is defined as a second coupling part 334a. The first plates 312 and 332 and the second plates 314 and 334 may be formed of metal such as nickel or nickel alloy.

The third lead plate 350 electrically connects the electrode terminal 154 disposed over the bare cell 100 to the PTC device 230 disposed under the protection circuit module 200. The third lead plate 350 is a negative electrode lead plate.

Hereinafter, the coupling of the first and second lead plates 310 and 330 to the cap plate 151 will be described. The first lead plate 310 and the first recess 151a correspond to the second lead plate 330 and the second recess 151b, respectively. Thus, the coupling of the first lead plate 310 to the first recess 151a will now be representatively described.

FIG. 4 illustrates an enlarged view of the battery pack.

Referring to FIG. 4, the first lead plate 310 of the battery pack 10 includes the first plate 312 electrically connected to one side of the lower surface of the protection circuit module 200, and the second plate 314 connected to one side of the first plate 312 and electrically connected to one side of the cap plate 151.

The first lead plate 310 has a simpler structure than a lead plate having a U-shape or Z-shape for connecting the protection circuit module 200 to the bare cell 100. In particular, since the number of plates constituting the first lead plate 310 is less than the number of plates constituting a lead plate having a U-shape or Z-shape, the first lead plate 310 has a simpler structure. Thus, manufacturing of the first lead plate 310 is easy, and the protection circuit module 200 is coupled to the bare cell 100 in a simple structure.

The first recess 151a is disposed at one side of the cap plate 151, and has a slot-like shape corresponding to the lower part of the second plate 314, that is, to the first coupling part 314a. Thus, the first recess 151 a has a rectangular parallelepiped shape in a three dimensional view, and a rectangular shape in a two dimensional view. The first coupling part 314a of the first lead plate 310 is mechanically and electrically connected to the first recess 151a of the cap plate 151 through press-fit coupling. The length and width of the first coupling part 314a correspond to those of the first recess 151a, and the first coupling part 314a is press-fit coupled to the first recess 151a. Thus, the frictional force due to the press-fit coupling prevents the first coupling part 314a from being removed from the first recess 151a.

In a case where a U-shaped or Z-shaped lead plate is used in a battery pack, when the lead plate is coupled to a cap plate through laser welding, a protection circuit module is pressed with a jig to remove the gap between the upper surface of the cap plate and the lead plate. In this case, the protection circuit module may be broken by the pressure of the jig, and a welding part of the lead plate may be spaced apart from the cap plate to cause welding defects. In particular, since a welding part of the lead plate may be spaced apart from the cap plate, the alignment of a laser beam or a welding terminal for welding is difficult. Accordingly, the welding terminal or the laser beam is in direct contact with the cap plate without contacting the lead plate, so that a hole is formed in the cap plate. In addition, since the lead plate is spaced apart from the cap plate, the lead plate may be not welded to the cap plate.

In constrast, when the protection circuit module 200 is coupled to the bare cell 100, the first and second lead plates 310 and 330, are just press-fit coupled to the bare cell 100. Accordingly, a jig pressing process is not required, thereby simplifying the manufacturing process and improving the efficiency of the manufacturing process. Also, because a welding process that causes defects may be removed or replaced with a reliable welding process, manufacturing costs can be reduced, and productivity can be improved.

The first coupling part 314a is coupled to the first recess 151a through conductive adhesive that improves electric conductivity between the cap plate 151 and the first lead plate 310 to reduce electric resistance between the bare cell 100 and the protection circuit module 200 and that improves mechanical connectivity between the first lead plate 310 and the cap plate 151. In alternative embodiments, a non-adhesive conducting material may be used to improve electrical connectivity between the first coupling parts 314a, 334a and the processes. A non-conducting adhesive may also be used to improve the mechanical connection.

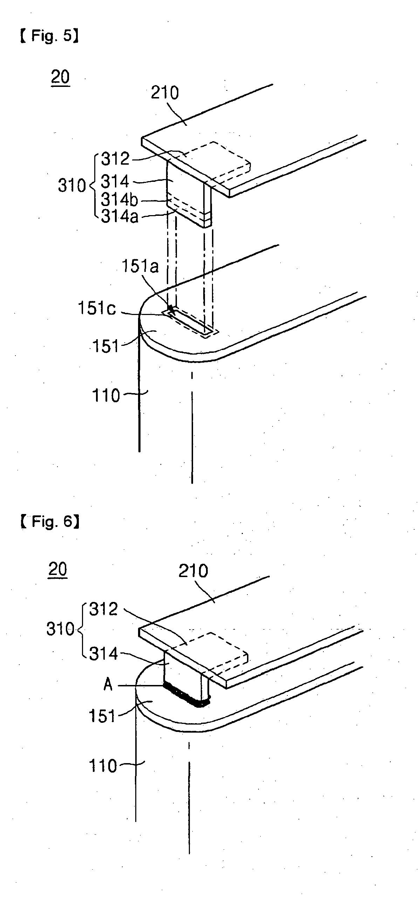

FIGS. 5 and 6 illustrate perspective views of a battery pack according to another embodiment.

Referring to FIGS. 5 and 6, the battery pack 20 according to the current embodiment is the same as the battery pack 10 except that the first lead plate 310 is press-fit coupled to the first recess 151a, and then a surrounding part 151c of the first recess 151a is melted and welded to the second lead plate 330. Thus, only the difference between the battery pack 20 and the battery pack 10 will now be described.

In the battery pack 20, the first coupling part 314a of the first lead plate 310 is press-fit coupled to the first recess 151a, as described in the previous embodiments.

Thereafter, a current is applied to the surrounding 151c of the first recess 151 a of the cap plate 151 to melt the surrounding portion 151c, and the cap plate 151 is welded to the second plate 314 through resistance welding, and particularly, through seam welding. In seam welding, a current is briefly applied to a region to be welded, and the resistance heat of a contact melts the region to be welded. At this point, a seam is continuously formed in the region to be welded.

Referring again to FIGS. 5 and 6, when a strong current is applied to the surrounding portion151c of the first recess 151a of the cap plate 151 or to an upper portion 314b of the first coupling part 314a of the second plate 314, the surrounding portion 151c is melted and welded to the upper portion 314b of the first coupling part 314a of the second plate 314, or the upper portion 314b of the first coupling part 314a is melted and welded to the surrounding portion 151c, thereby improving the coupling strength between the first lead plate 310 and the cap plate 151. At this point, a melted portion of the surrounding portion 151c or the upper portion 314b of the first coupling part 314a fills a gap between the first recess 151a and the first coupling part 314a coupled to the first recess 151a, thereby further improving the coupling strength between the first lead plate 310 and the cap plate 151. In FIG. 6, a region A denotes a welded region between the first lead plate 310 and the cap plate 151.

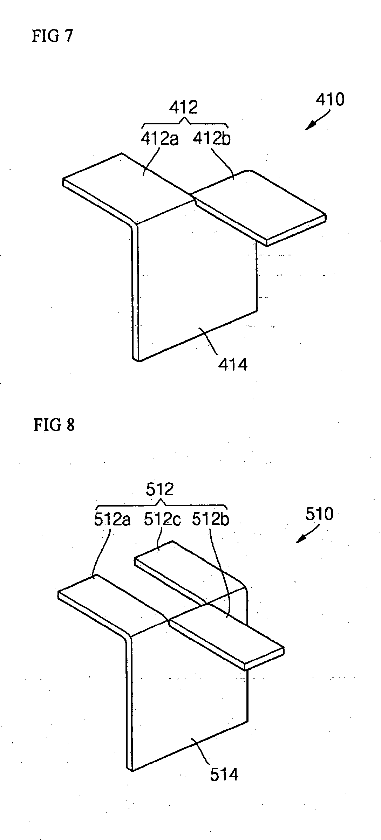

Figure 7 illustrates a lead plate 310 for use in an alternative embodiment of the invention. As with other embodiments, this lead plate may be used in combination with one or more lead plates having a different configuration or as one of a pair, wherein the other lead plate has the same configuration.

The lead plate of this embodiment differs from the lead plates of the previous embodiments in that it has a substantially T-shaped profile. The stem of the "T" is formed by a second plate 314 that has a substantially identical configuration to the second plates of the above embodiments. This second plate 314 engages with a recess 151a, 151b of the cap plate 151 in an identical manner to the above embodiments and it will not, therefore, be discussed further.

The cross-bar of the "T" is defined by two sub plates 312a and 312b. The sub plates are formed by dividing the first plate 312 of the lead plate in half and bending the two halves in opposite directions.

The first plate 312 of this embodiment acts as a support portion in exactly the same manner as the above embodiments. It is soldered to the side of the protection circuit module 200 that faces the bare cell in a similar manner to the above embodiments, although the distribution of the solder will naturally be different, to take account of the different shape offered by the surface area of the lead plate 312.

Figure 8 shows a further embodiment of a lead plate 312 in accordance with the invention. This lead plate is similar to that of Figure 7, but the cross-bar of the "T" is, in this case, formed by three sub plates 312a, 312b and 312c. These sub plates are formed by dividing the first plate 312 using two cuts and then bending the first and third sub plates 312a, 312c in one direction, and bending the second sub plate 312b in an opposite direction. The lead plate 310 of this embodiment may, like other embodiments, be used with differently configured lead plates, or as one of a matching pair. The lead plate is connected to the protection circuit module and the bare cell in exactly the same manner as the lead plate of Figure 7.

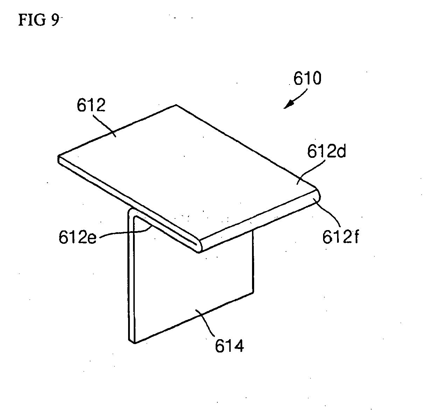

Figure 9 shows a further embodiment of a lead plate in accordance with the invention. This lead plate is similar to the lead plates of Figures 7 and 8, in that it has a T-shaped profile. The second plate 314 is identical to that of the lead plates of Figures 7 and 8 and it attaches to the cap plate in an identical manner and it will not, therefore, be discussed further.

The cross member of the "T" is formed by a first plate 312 that is formed by using two bends. In the first instance, the lead plate material is bent 90° towards the right of Figure 9 and the bent portion is then bent back upon itself through 180°, about a bend line 312f. The resulting structure has a first plate 312 formed from a lower sub plate 312e and an upper sub plate 312d, that has twice the length of the lower sub plate 312e.

As with other lead plates, this lead plate can be used in combination with lead plates having different configurations or as one of a matching pair. The first plate 312 is fitted to the protection circuit module 200 using soldering process, in common with the other embodiments described above.

Embodiments of the invention have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A secondary battery comprising:
a bare cell (100) including a cap plate (151) provided with a slot-shaped first recess;
a protective circuit module, PCM, (200); and
a first lead plate (310) for connecting the PCM (200) to the cap plate (151);
wherein the first lead plate (310) has a first laminar extension portion (314) and a first support portion (312), the said first support portion (312) being mated to a surface of the PCM (200) and the first extension portion (314) projecting towards the cap plate (151);
and wherein a distal end portion of the first extension portion (314) is retained in the said first recess, further wherein the said first lead plate (310) has a generally T-shaped profile; and a second lead plate (330) for connecting the PCM (200) to the cap plate (151);
wherein the second lead plate has a second laminar extension portion and a second support portion, the said second support portion being mated to a surface of the PCM and the second extension portion projecting towards the cap plate;
and wherein a distal end portion of the second extension portion is retained in a second slot-shaped recess provided in the cap plate.

2. A secondary battery according to claims 1, wherein the said first support portion (312) is arranged substantially perpendicular to the first extension portion (314).

3. A secondary battery according to claim 1 or 2, wherein the said first support portion (312) is laminar.

4. A secondary battery according to any preceding claim, wherein the said first lead plate (310) has a generally L-shaped profile.

5. A secondary battery according to any preceding claim, wherein the said distal end portion of the first extension portion (310) is gripped within the said first recess using a press-fit.

6. A secondary battery according to one of claims 1 to 4, wherein a portion of the said cap plate (151) which defines the first recess is welded to the said distal end portion of the first extension portion (310).

7. A secondary battery according to one of claims 1 to 5, wherein the said distal end portion of the first extension portion (310) is coupled to a wall of the recess using a conductive material.

8. A secondary battery according to one of claims 1 to 5, wherein the said distal end portion of the first extension portion (310) is coupled to a wall of the recess using an adhesive material.

9. A secondary battery according to claim 7, wherein the conductive material is an adhesive.

10. A secondary battery according to any preceding claim, wherein the said first support portion (312) is soldered to the PCM (200).

## Patentansprüche

1. Sekundärbatterie, die Folgendes umfasst:
eine blanke Zelle (100), die eine Deckplatte (151) einschließt, die mit einer schlitzförmigen ersten Aussparung versehen ist,
ein Schutzschaltungsmodul, PCM, (200) und
eine erste Zuleitungsplatte (310) zum Verbinden des PCM (200) mit der Deckplatte (151),
wobei die erste Zuleitungsplatte (310) einen ersten lamellenförmigen Erweiterungsabschnitt (314) und einen ersten Stützabschnitt (312) hat, wobei der erste Stützabschnitt (312) an eine Oberfläche des PCM (200) gepasst wird und der erste Erweiterungsabschnitt (314) zu der Deckplatte (151) hin vorspringt,
und wobei ein distaler Endabschnitt des ersten Erweiterungsabschnitts (314) in der ersten Aussparung festgehalten wird, wobei ferner die erste Zuleitungsplatte (310) ein im Allgemeinen T-förmiges Profil hat, und eine zweite Zuleitungsplatte (330) zum Verbinden des PCM (200) mit der Deckplatte (151),
wobei die zweite Zuleitungsplatte einen zweiten lamellenförmigen Erweiterungsabschnitt und einen zweiten Stützabschnitt hat, wobei der zweite Stützabschnitt an eine Oberfläche des PCM gepasst wird und der zweite Erweiterungsabschnitt zu der Deckplatte hin vorspringt,
und wobei ein distaler Endabschnitt des zweiten Erweiterungsabschnitts in einer zweiten schlitzförmigen Aussparung festgehalten wird, die in der Deckplatte bereitgestellt wird.

2. Sekundärbatterie nach Anspruch 1, wobei der erste Stützabschnitt (312) im Wesentlichen senkrecht zu dem ersten Erweiterungsabschnitt (314) angeordnet ist.

3. Sekundärbatterie nach Anspruch 1 oder 2, wobei der erste Stützabschnitt (312) lamellenförmig ist.

4. Sekundärbatterie nach einem der vorhergehenden Ansprüche, wobei die erste Zuleitungsplatte (310) ein im Allgemeinen L-förmiges Profil hat.

5. Sekundärbatterie nach einem der vorhergehenden Ansprüche, wobei der distale Endabschnitt der ersten Zuleitungsplatte (310) unter Verwendung einer Presspassung innerhalb des ersten Erweiterungsabschnitts festgehalten wird.

6. Sekundärbatterie nach einem der Ansprüche 1 bis 4, wobei ein Abschnitt der Deckplatte (151), der die erste Aussparung definiert, an den distalen Endabschnitt des ersten Erweiterungsabschnitts (310) geschweißt ist.

7. Sekundärbatterie nach einem der Ansprüche 1 bis 5, wobei der distale Endabschnitt des ersten Erweiterungsabschnitts (310) unter Verwendung eines leitfähigen Materials an eine Wand der Aussparung gekoppelt ist.

8. Sekundärbatterie nach einem der Ansprüche 1 bis 5, wobei der distale Endabschnitt des ersten Erweiterungsabschnitts (310) unter Verwendung eines klebenden Materials an eine Wand der Aussparung gekoppelt ist.

9. Sekundärbatterie nach Anspruch 7, wobei das leitfähige Material ein Klebstoff ist.

10. Sekundärbatterie nach einem der vorhergehenden Ansprüche, wobei der erste Stützabschnitt (312) an das PCM (200) gelötet ist.

## Revendications

1. Batterie rechargeable comprenant :
une cellule nue (100) comprenant une plaque de couverture (151) munie d'un premier renfoncement en forme de fente ;
un module de circuit de protection, MCP, (200) ; et
une première plaque conductrice (310) permettant de raccorder le MCP (200) à la plaque de couverture (151) ;
dans laquelle la première plaque conductrice (310) présente une première partie extension de type lame (314) et une première partie support (312), ladite première partie support (312) étant appariée à une surface du MCP (200) et la première partie extension (314) faisant saillie en direction de la plaque de couverture (151) ;
et dans laquelle une partie extrémité distale de la première partie extension (314) est retenue dans ledit premier renfoncement, et en outre dans laquelle ladite première plaque conductrice (310) présente un profil essentiellement en forme de T ; et une seconde plaque conductrice (330) permettant de raccorder le MCP (200) à la plaque de couverture (151) ;
dans laquelle la seconde plaque conductrice présente une seconde partie extension de type lame et une seconde partie support, ladite seconde partie support étant appariée à une surface du MCP et la seconde partie extension faisant saillie en direction de la plaque de couverture ;
et dans laquelle une partie extrémité distale de la seconde partie extension est retenue dans un second renfoncement en forme de fente fourni dans la plaque de couverture.

2. Batterie rechargeable selon la revendication 1, dans laquelle ladite première partie support (312) est agencée de manière essentiellement perpendiculaire à la première partie extension (314).

3. Batterie rechargeable selon la revendication 1 ou 2, dans laquelle ladite première partie support (312) est de type lame.

4. Batterie rechargeable selon l'une quelconque des revendications précédentes, dans laquelle ladite première plaque conductrice (310) présente un profil essentiellement en forme de L.

5. Batterie rechargeable selon l'une quelconque des revendications précédentes, dans laquelle ladite partie extrémité distale de la première partie extension (310) est prise dans ledit premier renfoncement au moyen d'une insertion en force.

6. Batterie rechargeable selon l'une quelconque des revendications 1 à 4, dans laquelle une partie de ladite plaque de couverture (151) qui définit le premier renfoncement est soudée à ladite partie extrémité distale de la première partie extension (310).

7. Batterie rechargeable selon l'une quelconque des revendications 1 à 5, dans laquelle ladite partie extrémité distale de la première partie extension (310) est couplée à une paroi du renfoncement au moyen d'un matériau conducteur.

8. Batterie rechargeable selon l'une quelconque des revendications 1 à 5, dans laquelle ladite partie extrémité distale de la première partie extension (310) est couplée à une paroi du renfoncement au moyen d'un matériau adhésif.

9. Batterie rechargeable selon la revendication 7, dans laquelle le matériau conducteur est un adhésif.

10. Batterie rechargeable selon l'une quelconque des revendications précédentes, dans laquelle ladite première partie support (312) est soudée au MCP (200).
